# FASCICULE DE BREVET EUROPEEN

(11) **EP 0 440 524 B1**
(45) Date de publication et mention de la délivrance du brevet: **29.12.1993**
(21) Numéro de dépôt: 91400151.6
(22) Date de dépôt: 24.01.1991
(51) Int. Cl.: A01G 31/00

(54) **Technique de culture de plantes à bulbes**
Kulturtechnik für Zwiebelpflanzen
Culture technique for bulbous plants

(30) Priorité: 31.01.1990 FR 9001114
(43) Date de publication de la demande: 07.08.1991
(73) Titulaire: ISOVER SAINT-GOBAIN, 92400 Courbevoie (FR)
(72) Inventeur: De Graaf, Martien, Vijfhuizen (NL)
(74) Mandataire: Le Vaguerèse, Sylvain Jacques

(56) Documents cités:
- EP-A- 0 176 134
- US-A- 3 112 577
- US-A- 3 608 238
- US-A- 4 777 763

## Description

L'invention est relative à la culture de bulbes en serre. Plus précisément, l'invention est relative à une technique et à un substrat artificiel pour la culture des bulbes.

Il est connu, pour la culture en serre des bulbes, de placer ceux-ci dans des conditions qui permettent une première étape de développement des plantes, leur transport et enfin l'achèvement de la culture. Ces différentes étapes, qui répondent aux besoins du marché, sont conduites de préférence, pour des raisons pratiques, sur le même substrat.

Il est ainsi traditionnel d'utiliser pour substrat de culture des bulbes, par exemple des bulbes de tulipes, une couche constituée de tourbe d'une épaisseur de l'ordre de 5 cm. Les bulbes sont placés sur ce matériau suivant l'arrangement propre à leur laisser un espace convenable pour leur croissance. Ils sont maintenus dans cette disposition en recouvrant la tourbe d'une couche de sable, ou d'un matériau de même nature, qui entoure les bulbes en les recouvrant sur une certaine hauteur. De cette façon, les bulbes qui ne sont que posés sur la tourbe sont maintenus en position au cours des différentes manipulations auxquelles ils peuvent être soumis.

Cette disposition permet une culture satisfaisante des bulbes, mais se heurte à certaines difficultés. Parmi celles-ci, il faut mentionner particulièrement celles qui sont liées au transport. A l'heure actuelle en effet, le développement initial de la culture est souvent très éloigné du lieu de consommation final. Par exemple, la culture des tulipes en serre est très largement développée aux Pays-Bas, lesquels exportent à travers le monde entier les bulbes à partir desquels sont obtenues les fleurs dans le pays de destination. Ce commerce, qui se fait sur des produits sensibles, a largement recours aux moyens de transport aériens. Pour cette raison, les questions de poids sont d'une très grande importance dans le prix de revient. La tourbe et le sable sont des éléments très pesants et constituent l'essentiel de la masse transportée, les bulbes et les plateaux n'en représentant qu'une faible part.

Une autre difficulté, liée à l'utilisation du sable, est son instabilité. La couche de sable que rien ne fixe peut être déplacée dans les manutentions des plateaux portant les bulbes entraînant une mauvaise distribution des bulbes sur le plateau et une position inadéquate de certains au moins de ces bulbes (leur position n'étant plus "verticale").

D'autres types de substrats ont été proposés notamment des matériaux synthétiques comme des mousses de polymères (polystyrène, polyuréthane, résines phénoliques). A l'usage cependant, ces matériaux se révèlent peu satisfaisants pour différentes raisons. Ils présentent d'abord des caractéristiques hydriques moins appropriées. La rétention d'eau est moins importante et, en conséquence, nécessite un contrôle beaucoup plus attentif des conditions dans lesquelles s'effectue la conservation et le développement des plants. Il semble également que ces matériaux conduisent à une moins bonne "colonisation racinaire". Cette particularité est probablement liée à la précédente. Sur un autre plan, l'utilisation des substrats est très dépendante de leur coût. Les mousses synthétiques s'avèrent sensiblement plus coûteuses que les produits comme la tourbe et le sable. Pour toutes ces raisons, les mousses synthétiques ne sont pas utilisées en pratique par les professionnels concernés par les applications envisagées par la présente invention.

Les inventeurs proposent un nouveau substrat pour la culture hors-sol des plantes à bulbe, substrat qui accompagne le bulbe pendant toute la culture y compris pendant les transports nécessités par la commercialisation. Selon l'invention, la culture des bulbes est effectuée sur un substrat constitué d'un feutre de fibres minérales hydrophiles dans lequel sont pratiqués, à intervalles réguliers, des "logements" ouverts sur une seule face du substrat, ces logements présentant une ouverture dont les dimensions sont entre 10 et 30% plus petite que celles des bulbes qu'ils reçoivent, et la profondeur des logements étant au moins suffisante pour que les bulbes mis en position pénètrent dans le logement au moins au niveau de leur plus grande section.

Dans les substrats utilisés selon l'invention, avantageusement le matériau dans lequel se développent les racines et celui qui permet le maintien des bulbes dans des positions bien stables tout au long de la culture sont les mêmes, par opposition aux techniques antérieures utilisant une couche de tourbe et une couche de sable. Comme on l'indique dans la suite, le matériau formant le substrat est éventuellement constitué à partir de deux éléments superposés pour des raisons de commodité de production. Mais, même dans ces cas, il n'y a pas de différence de nature dans les matériaux constituant ces deux éléments. Il s'agit toujours de deux feutres de fibres minérales superposés.

Les substrats formés de feutres minéraux hydrophiles utilisés pour d'autres techniques de cultures, notamment pour les cultures maraîchères et qui sont conditionnés sous forme de "cubes" et de "pains", ont le plus couramment une épaisseur de l'ordre de 75 mm. Compte tenu des besoins spécifiques liés à l'enracinement des bulbes et au maintien de ceux-ci dans leurs logements, ces feutres et une épaisseur de cet ordre sont parfaitement adaptés pour la réalisation de l'invention.

Selon les bulbes considérés et les conditions de culture, l'épaisseur totale du substrat selon l'invention pourra être différente. Elle n'est pas inférieure à 50 mm et pas supérieure à 100 mm.

Le choix de la qualité des feutres, notamment de leur masse volumique, est fonction en particulier de leurs propriétés mécaniques. S'il est préférable, du point de vue des coûts, d'utiliser des feutres légers, leur résistance mécanique est généralement restreinte. En règle générale, la qualité du feutre choisi est telle qu'il conserve une épaisseur suffisante même lorsqu'il est complètement saturé d'eau ou de solution nutritive. L'affaissement acceptable, qui est fonction de l'épaisseur initiale, ne doit pas, en règle générale, dépasser 30 % de l'épaisseur initiale et est, de préférence, inférieur à 20 %. La masse volumique correspondante se situe, selon la nature du feutre, entre environ 20 kg/m³ et 100 kg/m³. Pour les feutres en laine de verre, la masse volumique est relativement faible et se situe entre 20 et 50 kg/m³. Pour les feutres de laine de roche, la masse volumique varie ordinairement entre 40 et 100 kg/m³.

Le feutre doit être également suffisamment déformable de sorte que les bulbes soient introduits dans leurs logements sous l'effet d'une légère pression et maintenus en place par les parois avec lesquelles ils sont en contact. Autrement dit, l'élasticité de feutre est mise à profit pour bloquer les bulbes en position dans leurs logements.

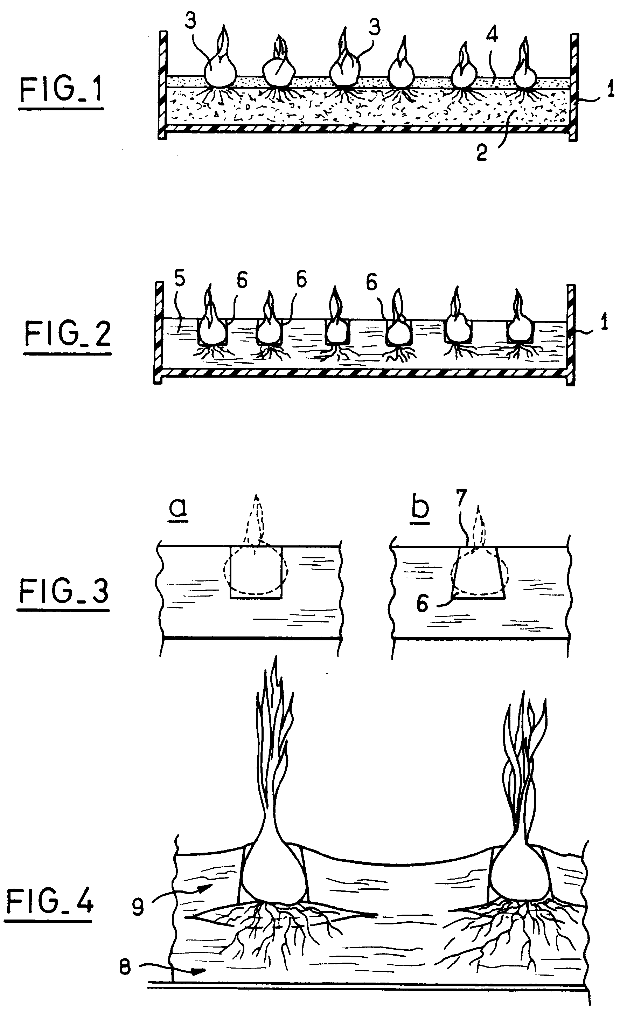

L'invention est décrite de façon plus détaillée en faisant référence à la planche de dessins dans laquelle :
. **la figure 1** est une vue, en coupe schématique, représentant le mode usuel de culture des bulbes,
. **la figure 2** est une vue analogue à la figure 1 mettant en oeuvre les dispositions selon l'invention,
. **les figures 3a** et **3b** représentent, en coupe, deux configurations selon l'invention des logements recevant les bulbes,
. **la figure 4** illustre une des particularités du développement des plantes en utilisant les moyens proposés par l'invention.

La culture des bulbes, par exemple de bulbes de tulipes, pendant la période hivernale est conduite traditionnellement sur des plateaux 1 qui supportent le substrat de culture. Ces plateaux sont utilisés pour faciliter la manutention et le transport des plants. Leurs dimensions sont, de préférence, normalisées pour faciliter leur entreposage et leur transport.

Dans le mode traditionnel représenté à la figure 1, le plateau 1 reçoit une couche de tourbe 2 dans laquelle va s'effectuer la croissance des racines. Dans la pratique, la couche de tourbe pour la culture des bulbes de tulipes présente une épaisseur de l'ordre de 5 cm.

La mise en place des bulbes 3 est effectuée ensuite en pressant légèrement ceux-ci sur la couche de tourbe pour éviter, autant que possible, que ceux-ci ne se renversent. Il est en effet important, pour leur bonne croissance, que les bulbes se présentent bien "verticalement", c'est-à-dire partie portant les racines bien au contact de la tourbe et partie aérienne vers le haut. Sur la figure 1, les plantes sont représentées à un stade postérieur de leur développement. Initialement, les bulbes ne portent pratiquement pas de feuilles ni de racines. A ce stade, on comprend qu'il soit très difficile de maintenir les bulbes dans cette position. Pour cette raison, on ajoute une couche de sable 4 dont le seul but est de stabiliser les bulbes. Cependant, pendant toute cette opération, ou ultérieurement au cours des différentes manutentions, les bulbes peuvent se renverser. Dans tous les cas l'opération, en raison de cette instabilité, se prête difficilement à une mise en place entièrement mécanisée.

Dans les premières étapes de la croissance des plantes, il arrive que certains bulbes ne se développent pas de façon satisfaisante. Dans ce cas, les horticulteurs soucieux de livrer des plateaux "complets" souhaitent pouvoir remplacer le bulbe défaillant. Sur le mode représenté à la figure 1, il est clair que l'enlèvement du bulbe laisse le sable meuble se répandre dans le "logement" ainsi libéré. La mise en place du bulbe de remplacement se fait sans qu'il soit très commode d'assurer un bon contact avec la tourbe sous-jacente. Les chances de succès s'en trouvent amoindries.

La figure 2 présente un plateau 1 dans lequel le substrat selon l'invention est utilisé. Ce substrat 5 est constitué d'une épaisseur de feutre de laine minérale comportant des logements 6 préformés.

Dans la pratique les logements 6 ont, de préférence, une ouverture circulaire pour des raisons de commodité de fabrication. Ces logements sont en effet avantageusement réalisés au moyen d'outils rotatifs, tels que les fraiseuses, sur des nappes de feutres découpées aux dimensions adéquates. A titre indicatif, une dimension traditionnelle est de 370 x 570 mm correspondant à des plateaux de dimensions extérieures 400 x 600 mm. Sur des plateaux de ce type, on dispose par exemple 100 logements pour des bulbes de tulipes dont les dimensions sont de l'ordre de 40 mm de diamètre.

La dimension de l'ouverture des logements 6 est fixée sensiblement inférieure à celle des bulbes. La dimension de l'orifice est, par exemple, 10 à 30 % plus petite que la dimension la plus grande du bulbe ce qui, compte tenu de l'élasticité du feutre, garantit l'immobilisation du bulbe dans son logement.

Si la forme cylindrique du logement est la plus commode à obtenir (figure 3a), il est possible d'aménager les logements de manière à renforcer encore le maintien du bulbe. Une forme réalisée dans ce sens est représentée à la figure 3b. Dans cette forme tronconique, l'ouverture 7 du logement 6 est plus étroite que la base de telle sorte que les parois qui entourent le bulbe tendent à repousser celui-ci vers le fond du logement. L'extraction accidentelle du bulbe est rendue encore plus difficile.

La profondeur des logements est proportionnée également à la dimension des bulbes qu'ils doivent recevoir. Elle doit être suffisante pour que la plus grande section du bulbe soit bien engagée dans le logement. De préférence, la profondeur des logements est au moins les 2/3 de la hauteur du bulbe. Avantageusement, cette profondeur ne dépasse pas la hauteur du bulbe. Il convient en effet de souligner que la partie active pour la croissance des racines se situe sous le bulbe. Le matériau qui se situe au-dessus a pour rôle essentiel le maintien du bulbe dans la position choisie. Une profondeur des logements supérieure à la hauteur des bulbes n'apporte pratiquement pas d'avantages, mais entraîne l'utilisation de feutres plus épais et donc plus coûteux, étant entendu que la partie située sous les bulbes ne peut être réduite sauf à limiter l'espace offert pour le développement des racines, ce qui n'est évidemment pas souhaitable.

Indépendamment du maintien du bulbe, la partie supérieure du feutre intervient également dans les caractéristiques de la culture. En effet, si les racines ne se développent pas dans cette partie du feutre, celle-ci participe aux caractéristiques hydriques du substrat. Contrairement à la couche de sable 4 des techniques traditionnelles qui ne retient pratiquement par l'humidité, la partie supérieure du feutre participe pour une part importante à la capacité de rétention d'eau du substrat.

Le cas échéant, pour faciliter la formation des logements dans les substrats selon l'invention, il peut être préférable de superposer deux éléments de feutres. Dans cette hypothèse, un premier feutre constitue la partie correspondant aux logements. Ceci permet, par exemple, de former ces logements par estampage ce qui est sensiblement plus rapide qu'en "creusant" ceux-ci, comme indiqué précédemment. En outre, l'estampage du feutre, compte tenu des déformations locales qu'il entraîne, particulièrement pour les feutres les plus légers et, par suite, les moins rigides, peut aboutir directement à la formation des formes tronconiques indiquées précédemment. Lorsque l'on procède à la formation du substrat à partir de deux éléments, il va de soi que l'élément placé à la partie inférieure est constitué d'un feutre sur lequel il n'est pas nécessaire de prévoir un façonnage particulier. Ce feutre constitue le "fond" des logements et la partie dans laquelle se développent les racines. Les épaisseurs relatives de ces deux éléments correspondent à leur rôle respectif, comme indiqué précédemment.

Lorsque le substrat est formé de deux bandes de feutres superposées, il est préférable selon l'invention de choisir le même matériau, mais il est possible de choisir aussi deux feutres minéraux qui diffèrent, par exemple, dans leur masse volumique pour ajuster au mieux le choix de ceux-ci aux rôles qui leur sont propres, à savoir le maintien des bulbes pour la bande supérieure, la croissance des racines pour la bande inférieure.

Lorsque le substrat est formé à partir de deux bandes de feutres distinctes, elles peuvent être simplement superposées, mais il est possible également de les solidariser. Ceci peut être obtenu au moyen d'agrafes, par aiguilletage ou par collage au moyen d'un liant tel que celui, par exemple, servant à la confection du feutre lui-même.

Les feutres utilisés dans le domaine de la culture hors-sol se caractérisent également par la disposition de leurs fibres. Traditionnellement, les feutres les plus usuels présentent une structure "stratifiée", les fibres se positionnant statistiquement dans des plans sensiblement parallèles aux faces de la nappe de feutre (disposition qui tient au mode de formation de ces feutres par dépôt sur un convoyeur de fibres véhiculées par un courant gazeux). Il est aussi connu, par d'autres demandes de brevets de la Demanderesse, d'utiliser des feutres dans lesquels la structure stratifiée initiale est modifiée pour conduire à une distribution des fibres plus "aléatoire" sans pour autant être complètement isotrope. Le mode d'obtention de tels feutres fait l'objet, en particulier, du brevet français No. 2 548 695.

Lorsque l'on utilise un feutre "stratifié", il est intéressant de constater que le développement des racines peut être tel que la pression qui s'exerce sur le bulbe pour le chasser de son logement peut amener à une séparation des couches du feutre, comme représenté à la figure 4. La séparation partielle (ou complète) des couches inférieure 8 et supérieure 9, dans ces conditions, n'est pas dommageable au bon déroulement de la culture. Les fonctions de chacune de ces couches se trouvent convenablement assurées, à savoir milieu de développement des racines à partie inférieure et maintien en position et à la verticale de la plante pour la partie supérieure.

La séparation des couches que nous venons d'indiquer n'est pas "nécessaire" pour le maintien des bulbes. En utilisant un feutre suffisamment souple, le même avantage du maintien du bulbe peut résulter d'une simple déformation du feutre dans le sens de l'épaisseur, la séparation des couches n'apparaissant que comme la conséquence du dépassement de la limite de résistance à l'arrachement. Dans tous les cas l'important est que, quelles que soient les conditions de mise en oeuvre, l'effet de maintien du bulbe soit conservé. Par ailleurs, si l'on veut éviter cette séparation des couches, il est possible d'utiliser les feutres dont nous avons dit qu'ils présentent une distribution plus isotrope des fibres. Ces feutres résistent beaucoup mieux aux efforts d'arrachement que peuvent imprimer les bulbes lors de la croissance des racines.

Un plateau avec son armature formant cagette et comprenant un substrat de 370 x 570 mm portant 100 bulbes de tulipes et constitué :
. soit de façon traditionnelle d'une couche de tourbe de 50 mm d'épaisseur et d'une couche de sable de 25 mm d'épaisseur correspond à un poids de l'ordre de 20 kg,
. soit avec un feutre de laine de roche dont la masse volumique est de l'ordre de 70 kg/m³ et pour la même épaisseur totale de 75 mm, ne fait qu'une dizaine de kg.

La réduction de poids est donc extrêmement appréciable surtout pour les coûts de transport.

Nous avons vu que cette réduction de poids n'est pas le seul avantage procuré par l'invention et que la stabilisation des bulbes était également importante. Cet avantage est alors sensible, que les produits soient destinés aux marchés lointains, comme aux marchés les plus proches.

Il est un autre avantage qui intervient également quelle que soit la destination finale. Les substrats "naturels" à base de tourbe ne peuvent plus être garantis exempts de germes pathogènes, comme le pythium. Même si l'on procède à un traitement de stérilisation (ce qui accroît le coût de ces produits et tend, par là même, à réduire la différence qui peut exister sur ce point avec les substrats selon l'invention), on constate l'apparition d'espèces résistantes à ces traitements traditionnels. Les substrats constitués de laine minérales peuvent être obtenus parfaitement stériles quant à eux, et ceci peut suffire à justifier la préférence dont ils peuvent être l'objet.

Dans ce qui précède, des exemples ont été fournis concernant la culture des tulipes. Ceci n'est pas limitatif. Toute culture de bulbes peut être envisagée dans des conditions analogues : jacinthes, iris, tubéreuses, glaïeuls, jonquilles, narcisses...

## Revendications

1. Technique de culture de plantes à bulbes dans laquelle les bulbes sont placés dans des logements (6) pratiqués dans un feutre de laine minérale hydrophile (5), lesdits logements disposés à intervalles réguliers et n'étant ouverts que sur une face du feutre, la dimension de l'ouverture des logements (6) est entre 10 et 30 % plus petite que celle des bulbes (3) qui y sont introduits et la profondeur des logements étant suffisante pour que les bulbes (3) mis en position pénètrent dans le logement au moins jusqu'au niveau de leur plus grande section.

2. Technique selon la revendication 1 dans laquelle le feutre minéral utilisé est placé sur un plateau rigide constituant une cagette (1).

3. Technique selon la revendication 1 dans laquelle la profondeur de chaque logement (6) est comprise entre les 2/3 et 1/1 de la hauteur des bulbes (3).

4. Substrat pour la mise en oeuvre de la technique de la revendication 1 constitué d'un feutre de laine minéral hydrophile (5) d'épaisseur comprise entre 50 et 100 mm comprenant des logements (6) disposés à intervalles réguliers et n'étant ouverts que sur une face du feutre (5), la dimension de l'ouverture des logements (6) étant entre 10 et 30 % plus petite que celle des bulbes (3) à introduire et la profondeur des logements étant suffisante pour que les bulbes (3) mis en position pénètrent dans le logement au moins jusqu'au niveau de leur plus grande section.

5. Substrat selon la revendication 4 dont la masse volumique est comprise entre 20 et 100 kg/m³.

6. Substrat selon la revendication 5 dans lequel les logements (6) sont de forme cylindrique.

7. Substrat selon la revendication 5 dans lequel les logements (6) sont de forme tronconique et s'évasent de haut en bas.

8. Substrat selon la revendication 5 dans lequel le feutre choisi est tel que le feutre saturé d'eau ne s'affaisse pas de plus de 30 %.

9. Substrat selon la revendication 5 dans lequel les fibres sont distribuées de telle sorte que l'on ne puisse séparer des couches de feutres lorsque celui-ci est soumis à un effort d'arrachement dans le sens de son épaisseur.

## Patentansprüche

1. Kulturverfahren für Zwiebelpflanzen, bei dem die Zwiebeln in Setzlöcher (6) gesteckt werden, welche in einem Filz (5) aus hydrophiler Mineralwolle angebracht sind, wobei die Setzlöcher in gleichmäßigen Abständen vorgesehen und nur nach einer Seite des Filzes hin offen sind, die Öffnung der Setzlöcher (6) zwischen 10 und 30% kleiner ist als die dort einzusetzenden Zwiebeln (3), und die Tiefe der Setzlöcher ausreichend ist, damit die eingesetzten Zwiebeln (3) mindestens bis zu ihrem größten Querschnitt in das Setzloch aufgenommen werden.

2. Verfahren nach Anspruch 1, bei dem der verwendete Mineralfilz auf eine käfigförmig ausgebildete, starre Auflage (1) gestellt wird.

3. Verfahren nach Anspruch 1, bei dem die Tiefe jedes Setzloches (6) zwischen 2/3 und 1/1 der Höhe der Zwiebeln (3) liegt.

4. Substrat für die Anwendung des Verfahrens nach Anspruch 1, welches aus einem Filz (5) aus hydrophiler Mineralwolle mit einer Dicke zwischen 50 und 100 mm besteht und Setzlöcher aufweist.

5. Substrat nach Anspruch 4 mit einer Dichte zwischen 20 und 100 kg/m³.

6. Substrat nach Anspruch 5, bei dem die Setzlöcher (6) zylinderförmig sind.

7. Substrat nach Anspruch 5, bei dem die Setzlöcher (6) kegelstumpfförmig sind und von oben nach unten weiter werden.

8. Substrat nach Anspruch 5, bei dem der ausgewählte Filz so beschaffen ist, daß der mit Wasser gesättigte Filz um nicht mehr als 30% zusammensackt.

9. Substrat nach Anspruch 5, bei dem die Fasern derart verteilt sind, daß sich Schichten des Filzes nicht voneinander trennen lassen, wenn es einer Reißbeanspruchung in der Dickerichtung unterzogen wird.

## Claims

1. Technique for cultivating bulb-based plants in which the bulbs are placed in housings (6) provided in a hydrophilic mineral wool felt (5), the said housings being disposed at regular intervals and being open on only one face of the felt, the size of the opening of the housings (6) being between 10 and 30% smaller than that of the bulbs (3) which are introduced thereinto and the depth of the housings being sufficient for the bulbs (3) placed in position to penetrate the housing at least as far as their greatest cross-section.

2. Technique according to Claim 1, wherein the mineral felt used is placed on a rigid tray which constitutes a small crate (1).

3. Technique according to Claim 1, wherein the depth of each housing (6) is between two thirds and the complete height of the bulbs (3).

4. Substrate for performing the technique according to Claim 1, consisting of a hydrophilic mineral wool felt (5) which is between 50 and 100 mm thick and comprises housings (6), the said housings being disposed at regular intervals and being open on only one face of the felt (5), the size of the opening of the housings (6) being between 10 and 30% smaller than that of the bulbs (3) to be introduced thereinto and the depth of the housings being sufficient for the bulbs (3) placed in position to penetrate the housing at least as far as their greatest cross-section.

5. Substrate according to Claim 4, of which the density is between 20 and 100 kg/m³.

6. Substrate according to Claim 5, wherein the housings (6) are cylindrical.

7. Substrate according to Claim 5, wherein the housings (6) are frustoconical and widen in the downward direction.

8. Substrate according to Claim 5, wherein the felt selected is such that the water-saturated felt does not collapse by more than 30%.

9. Substrate according to Claim 5, wherein the fibres are distributed such that the felt layers cannot be separated when a tearing stress is applied to them in the direction of their thickness.
